# EUROPEAN PATENT SPECIFICATION

(11) **EP 2 576 242 B1**
(45) Date of publication and mention of the grant of the patent: **03.11.2021**
(21) Application number: 11790091.0
(22) Date of filing: 31.05.2011
(51) Int. Cl.: B44C 5/04, B32B 21/02, B32B 37/24, B05D 1/30, B05D 7/06, B32B 5/16, E04F 15/02

(54) **A METHOD OF MANUFACTURING A DECORATIVE FLOOR PANEL COMPRISING A DRY POWDER LAYER**
VERFAHREN ZUR HERSTELLUNG EINER DEKORATIVEN BODENPLATTE MIT EINER TROCKENPULVERSCHICHT
PROCÉDÉ DE FABRICATION D'UN PANNEAU DE REVÊTEMENT DE SOL DÉCORATIF COMPRENANT UNE COUCHE DE POUDRE SÈCHE

(30) Priority: 31.05.2010 US 349950 P; 31.05.2010 SE 1050542
(43) Date of publication of application: 10.04.2013
(73) Proprietor: Välinge Innovation AB, 263 64 Viken (SE)
(72) Inventor: JACOBSSON, Jan, 261 39 Landskrona (SE)
(74) Representative: Välinge Innovation AB
(86) International application number: PCT/SE2011/050679
(87) International publication number: WO 2011/152787

(56) References cited:
- EP-A1- 1 125 971
- EP-A2- 1 136 251
- WO-A1-2009/124704
- WO-A1-2011/129757
- WO-A2-02/42167
- WO-A2-2009/065769
- WO-A2-2009/065769
- DE-A1- 10 331 657
- DE-A1- 10 331 657
- US-A- 3 914 359
- None

## Description

### Technical field

The disclosure generally relates to a method for producing a fibre-based building panel, preferably a floor panel, and to a building panel produced by said method.

### Background

A new type of panel called Wood Fibre Floor (WFF) is disclosed in WO2009/065769, which shows both products and methods to produce such a panel. Further methods and production equipments are disclosed in WO2009/124704.

The WFF floor panels are produce by applying a dry powder mix on a HDF core. The powder mix is bonded together under heat and pressure to form a decorative surface layer.

In order to stabilize the dry powder mix the production methods in WO2009/065769 or in WO2009/124704 (see page 15, line 15-21; figure 3) uses spraying of pure water or water with additives.

Further, WO2011/129757 discloses a building panel having a solid decorative surface with a decorative wear layer, comprising fibres, binders, colour substance, wear resistant particles and a digital ink print, and a method to produce such a panel.

Yet, further DE10331657 discloses Organic and/or inorganic granules and/or fibers flock are added to a tool cavity to form a decorative layer. Layers are compressed and steam introduced to fuse the particles and sinter them onto.

US3914359 discloses a method of making a building panel having a central layer of expanded polymer beads optionally mixed with liquid setting powder and outer layers of fibre-reinforced liquid setting powder. The constituents are introduced in a dry state in layers into a mould with the beads partially pre-expanded and then steam is caused to permeate through the dry constituents to provide heat for fully expanding the beads and liquid for activating the powder so that expansion of the beads causes the constituents to coalesce into a compacted product which can be rapidly demoulded.

### Summary of the Disclosure

An objective of embodiments of the disclosure is to provide production methods that are more effective than the present known technology. Another objective is to produce panels with a more uniform colour or a more controlled colour variation and/or pattern.

When pressing a surface layer out of powder mix - such as a WFF mixture disclosed in WO2009/065769 or in WO2009/124704 - one problem is to avoid that the powder mixture completely or partly blows off when the board is handled in the line before pressing and/or blow out of the press when the air is evacuated due to the closing of the press.

The known solutions to stabilize the powder by using spraying of water has the disadvantage that it is difficult to control the distribution of the water and to avoid water drops unintentionally falling down on the powder layer from the spraying unit.

An uneven water distribution and/or unintentional water drops normally have a negative effect of the visual as well as technical properties of the product. Furthermore, a waiting time to let the water penetrate into the powder before entering the press slow down the press cycle and to total out put from the production line is lowered.

The subject of the current invention defines a method of manufacturing a panel comprising a core and a decorative surface layer comprising the steps of:
- Applying a dry powder layer on a core wherein the dry powder layer comprises a mix of wood fibres and binder(s); and
- Applying steam to the powder layer by a steam box, wherein the steam box has one or more outlets at the bottom for steam, positioned above a transportation belt, and wherein the steam box is equipped with one or several layers of nets to even out the steam concentration close to the powder layer.

The steam is preferably a water steam, most preferably a substantially pure water steam, even though the steam may comprise one or more additives. Examples of additives are wetting agents, releasing agents and/or colour additives.

The powder layer may also include wear resistant particles, preferably aluminium oxide. The core is preferably a wood fibre based core, preferably an HDF panel.

The steam is applied by a steam box

A second aspect of the disclosure, not presently claimed, is a method of manufacturing a panel comprising a core (1) and a surface layer (4) with a designed pattern comprising the steps of:
- Applying a dry powder layer (2) on a core (1); and
- Creating a pattern by applying steam to parts of the powder layer or applying steam unevenly (e.g., over all of the powder layer, but in different amounts) over the powder layer.

The steam in the first and the second aspect is preferably a water steam, most preferably a substantially pure water steam, even though the steam may comprise one or more additives. The steam may be a mist or the gas phase of water (water vapour), preferably a saturated vapour and most preferably a saturated vapour mainly comprising water.

Preferred embodiments of the first and second aspects of the disclosure are disclosed below.

A third aspect of the disclosure, not presently claimed, is a panel produced according to any one the aspects above.

The methods above may be used to any production of a building panel in which a dry powder layer is applied to a core.

### Brief Description of the Drawings

The disclosure will in the following be described in connection to exemplary embodiments and in greater detail with reference to the appended exemplary drawings, wherein:
- Fig. 1: Illustrates a production line and a method according to an embodiment of the disclosure;
- Figs. 2a-b: Illustrate a method for creating a design according to an embodiment of the disclosure;
- Fig. 3: Illustrates a method for creating a design according to an embodiment of the disclosure.

### Detailed Description of Embodiments

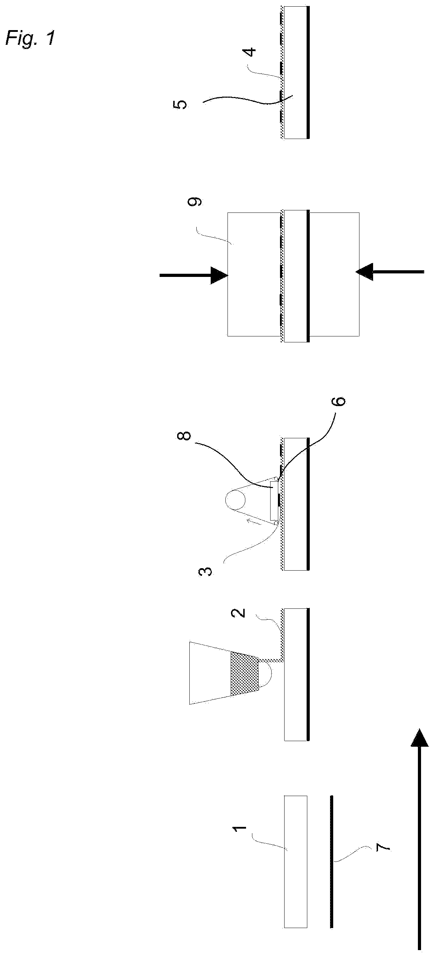

In figure 1 an embodiment of a production line is disclosed for producing a panel 5 with a decorative layer 4. A dry powder mix 2 is applied by scattering on a core 1, preferably an HDF core. The powder mix is stabilized by applying steam 3 before the powder mix is bonded together by applying heat and pressure in, for example, a press 9. If a pattern is desired, the steam may in one embodiment, be applied through a template 6, preferably rotating. In a preferred embodiment also a balancing layer 7 is applied to the core.

In the methods according to the present disclosure preferably the same scattering and pressing units as disclosed in WO2009/065769 or in WO2009/124704 are used.

The steam is applied by using a steam box 8, a box with one or more outlets at the bottom for steam, positioned above the transportation belt. The box preferably extends across the panel with a uniform width. An even moisture distribution is applied over the surface of the scattered powder layer 2, when the board pass under the steam box. Since the steam penetrate into the powder very effectively it is possible to immediately move the board into the press and close the press 9.

A suitable steam box is either fed by an external steam generator or the steam is generated in the steam box itself. The steam box is equipped with one or several layers of nets for example mesh and/or sheets with holes to even out the steam concentration close to the powder layer.

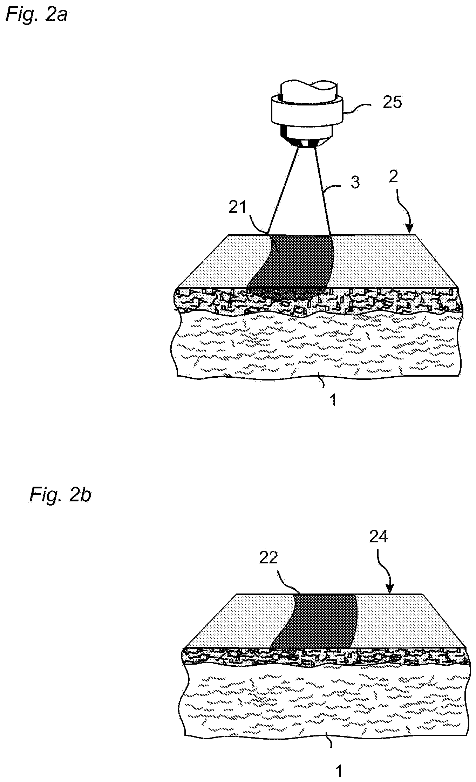

Figure 2a and 2b shows how an uneven distribution of moisture 21, obtained by applying steam 3 through, e.g., a nozzle 25, can be used for design effect purpose. Different amount of moisture 21 in different parts of a single colour powder, but not yet pressed, surface gives a visual colour difference of the different parts. By controlling where on the surface the moisture content is higher a wanted design effect 22 can be generated (see fig. 2b) in the pressed surface 24 of the panel even if only one unicolored powder layer is applied on the core 1. By controlling the relative movement between a core 1 with the powder mix layer 2 and one or several steam outlets a controlled variation of the content of moisture 21 in the powder can be achieved. This variation of moisture content will after pressing be visible as colour differences 22 on the ready surface 24. One or several of the steam outlets could be fixed on a robot arm and their position in relation to the scattered board could then be controlled in all directions.

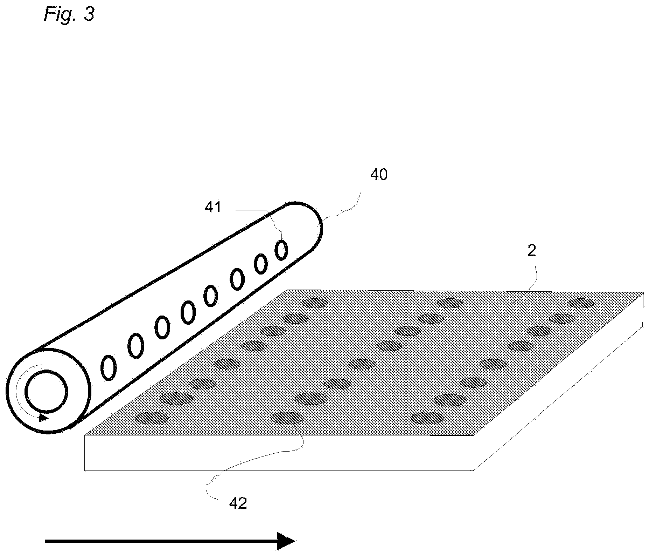

The steam outlets 41 could be positioned in a rotating device, preferably a steam pipe 40, to generate a controlled moisture variation 42 in the powder layer 2, see figure 3.

### As a non-limiting example, the steps for producing a WFF board could be as follows:

1) Place a balancing layer, e.g. a paper impregnated with a thermosetting resin or a mixture of wood powder and thermosetting resin is placed on a transportation belt. A typical balancing layer is two sheets of DKB 140 paper.
2) Place a wood fibre board, typically an about 10 mm thick HDF board with a density of typically about 900 kg/m3, on top of the balancing layer.
3) Moving the balancing layer and board in a speed of 1-10 m/min (a typical value is about 3 m/min) under a scattering machine were a premade mixture of wood fibres, binders, hard particles and pigments are scattered on top of the board. The powder applied can be in the range of about 100-1000 g/m2. Typical value is about700 g/m2.
4) Moving the board, with a balancing layer on the backside and a scattered powder layer on the top side, through a steam box with even steam concentration in the speed of 1-10 m/min (typical value is about 3 m/min) where steamed water, with or without additives, penetrates into the powder and stabilize it to improve further handling and to avoid that the powder blows out when the press is closing. Typical amount of moisture applied by the steam box is 3 g/m2.
5) Bringing the board with a balancing layer on the backside and a scattered and steam stabilized powder layer on the top side into the press.
6) Closing the press, and curing the thermosetting resin in the balancing layer and the powder layer under heat and pressure. Typical press parameters are 30 seconds pressing (range is, for example, 8-60 seconds). 40 bars pressure (range is, for example, 30-60 bars) may be applied on the board. Temperature of typically about 170 degrees C (range is, for example, 150-220 degrees C) on the top and bottom press plates. The pressing surfaces of the press plates can be even or have structure. Structure depth typically about 0.5 mm (range for example about 0-1.5 mm)

In an alternative example also one or more paper sheets are applied after step 4.

### An example of a production of a WFF board with a designed pattern by controlled uneven moisture distribution:

1) Place a balancing layer, e.g. a paper impregnated with a thermosetting resin or a mixture of wood powder and thermosetting resin is placed on a transportation belt. A typical balancing layer is two sheets of DKB 140 paper.
2) Place a wood fibre board, typically an about 10 mm thick HDF board with a density of typically about 900 kg/m3, on top of the balancing layer.
3) Moving the balancing layer and board in a speed of about 1-10 m/min (typical value is about 3 m/min) under a scattering machine were a premade mixture of wood fibres, binders, hard particles and pigments are scattered on top of the board. The powder applied can be in the range of about 100-1000 g/m2. Typical value is about 700 g/m2.
4) Moving the board, with a balancing layer on the backside and a scattered powder layer on the top side, under one or several steam outlets that also might move sideways and open and close during the board passing time, in the speed of about 1-10 m/min (typical value is about 3 m/min) where steamed water, with or without additives, penetrates into the powder in an uneven but controlled way to obtain a variation in the moisture content in the powder layer.
5) Bringing the board with a balancing layer on the backside and a scattered and steam stabilized powder layer on the top side into the press.
6) Closing the press, and curing the thermosetting resin in the balancing layer and the powder layer under heat and pressure. The different moisture content resulting in a visible design effect in the ready pressed board. Typical press parameters are about 30 seconds pressing (range is, for example, about 8-60 seconds). About 40 bars pressure (range is, for example, 30-60 bars) may be applied on the board. Temperature of typically about 170 degrees C (range is, for example, about 150-220 degrees C) on the top and bottom press plates. The pressing surfaces of the press plates can be even or have structure. Structure depth typically value about 0.5 mm (range for example about 0-1.5 mm)

In an alternative example also one or more paper sheets are applied after step 4.

## Claims

1. A method of manufacturing a panel comprising a core (1) and a decorative surface layer (4) comprising the steps of:
• applying a dry powder layer (2) on a core (1), wherein the dry powder layer comprises a mix of wood fibres and binder(s); and
• applying steam to the powder layer by a steam box (8), **characterized in that** the steam box (8) has one or more outlets at the bottom for steam, positioned above a transportation belt, and wherein the steam box (8) is equipped with one or several layers of nets to even out the steam concentration close to the powder layer (2).

2. The method as claimed in claim 1, wherein the steam is a vapour comprising water.

3. The method as claimed in claim 1, wherein the steam is a saturated vapour consisting essentially of water.

4. The method as claimed in any one of the proceeding claims, the method further comprising the step of bonding the powder in the powered layer together by applying heat and pressure, and thereby forming a decorative surface layer.

5. The method as claimed in any one of the proceeding claims, wherein the dry powder layer comprises a mix of fibres and binder(s).

6. The method as claimed in any one of the proceeding claims, wherein the core is a wood fibre based core.

7. The method as claimed in any one of the proceeding claims, wherein the core is an HDF or MDF board.

8. The method as claimed in any one of the preceding claims, wherein the panel is a floor panel.

9. The method as claimed in any one of the preceding claims, wherein the powder layer comprises wear resistant particles.

10. The method as claimed in any one of the preceding claims, wherein the powder layer comprises aluminium oxide.

11. The method as claimed in any one of the preceding claims, wherein the steam is substantially uniformly applied over the powder layer.

## Patentansprüche

1. Verfahren zur Herstellung einer einen Kern (1) und eine dekorative Oberflächenschicht (4) umfassenden Platte, umfassend die folgenden Schritte:
• Aufbringen einer Trockenpulverschicht (2) auf einen Kern (1), wobei die Trockenpulverschicht eine Mischung aus Holzfasern und Bindemittel(n) umfasst; und
• Aufbringen von Dampf auf die Pulverschicht durch einen Dampfkasten (8), **dadurch gekennzeichnet, dass** der Dampfkasten (8) einen oder mehrere Auslässe am Boden für Dampf aufweist, die über einem Transportband positioniert sind, und wobei der Dampfkasten (8) mit einer oder mehreren Schichten von Netzen ausgestattet ist, um die Dampfkonzentration nahe der Pulverschicht (2) auszugleichen.

2. Verfahren nach Anspruch 1, wobei der Dampf ein Dampf ist, der Wasser umfasst.

3. Verfahren nach Anspruch 1, wobei der Dampf ein gesättigter Dampf ist, der im Wesentlichen aus Wasser besteht.

4. Verfahren nach einem der vorhergehenden Ansprüche, wobei das Verfahren ferner den Schritt des gegenseitigen Verbindens des Pulvers in der angetriebenen Schicht durch Anwenden von Wärme und Druck, und dadurch Bilden einer dekorativen Oberflächenschicht, umfasst.

5. Verfahren nach einem der vorhergehenden Ansprüche, wobei die Trockenpulverschicht eine Mischung aus Fasern und Bindemittel(n) umfasst.

6. Verfahren nach einem der vorhergehenden Ansprüche, wobei der Kern ein holzfaserbasierter Kern ist.

7. Verfahren nach einem der vorhergehenden Ansprüche, wobei der Kern eine HDF- oder MDF-Platte ist.

8. Verfahren nach einem der vorhergehenden Ansprüche, wobei die Platte eine Bodenplatte ist.

9. Verfahren nach einem der vorhergehenden Ansprüche, wobei die Pulverschicht abriebfeste Teilchen umfasst.

10. Verfahren nach einem der vorhergehenden Ansprüche, wobei die Pulverschicht Aluminiumoxid umfasst.

11. Verfahren nach einem der vorhergehenden Ansprüche, wobei der Dampf im Wesentlichen gleichmäßig über die Pulverschicht aufgebracht wird.

## Revendications

1. Procédé de fabrication d'un panneau comprenant une âme (1) et une couche de surface décorative (4) comprenant les étapes consistant à :
• appliquer une couche de poudre sèche (2) sur une âme (1), dans lequel la couche de poudre sèche comprend un mélange de fibres de bois et de liant(s) ; et
• appliquer de la vapeur à la couche de poudre par une boîte à vapeur (8), **caractérisé en ce que** la boîte à vapeur (8) a une ou plusieurs sorties au fond pour de la vapeur, positionnée au-dessus d'une bande transporteuse, et dans lequel la boîte à vapeur (8) est équipée d'une ou plusieurs couches de treillis pour uniformiser la concentration en vapeur près de la couche de poudre (2).

2. Procédé tel que revendiqué dans la revendication 1, dans lequel la vapeur est une condensation comprenant de l'eau.

3. Procédé tel que revendiqué dans la revendication 1, dans lequel la vapeur est une condensation saturée constituée essentiellement d'eau.

4. Procédé tel que revendiqué dans l'une quelconque des revendications précédentes, le procédé comprenant en outre l'étape de liaison de la poudre dans la couche alimentée conjointement à l'application de chaleur et pression, et en formant de ce fait une couche de surface décorative.

5. Procédé tel que revendiqué dans l'une quelconque des revendications précédentes, dans lequel la couche de poudre sèche comprend un mélange de fibres et de liant(s).

6. Procédé tel que revendiqué dans l'une quelconque des revendications précédentes, dans lequel l'âme est une âme à base de fibres de bois.

7. Procédé tel que revendiqué dans l'une quelconque des revendications précédentes, dans lequel l'âme est un panneau de HDF ou de MDF.

8. Procédé tel que revendiqué dans l'une quelconque des revendications précédentes, dans lequel le panneau est un panneau de plancher.

9. Procédé tel que revendiqué dans l'une quelconque des revendications précédentes, dans lequel la couche de poudre comprend des particules résistantes à l'usure.

10. Procédé tel que revendiqué dans l'une quelconque des revendications précédentes, dans lequel la couche de poudre comprend de l'oxyde d'aluminium.

11. Procédé tel que revendiqué dans l'une quelconque des revendications précédentes, dans lequel la vapeur est appliquée de façon essentiellement uniforme par-dessus la couche de poudre.
